## Europäisches Patentamt
## European Patent Office
## Office européen des brevets

(19)

(11) Numéro de publication: **0 189 512**
**B1**

(12) # FASCICULE DE BREVET EUROPÉEN

(45) Date de publication du fascicule du brevet:
**20.07.88**

(51) Int. Cl.⁴: **A 47 J 43/046,** B 01 F 7/26

(21) Numéro de dépôt: **85105622.6**

(22) Date de dépôt: **08.05.85**

(54) **Outil batteur-émulsionneur pour appareil électroménager de préparation des aliments.**

(30) Priorité: **29.01.85 FR 8501209**

(43) Date de publication de la demande:
**06.08.86 Bulletin 86/32**

(45) Mention de la délivrance du brevet:
**20.07.88 Bulletin 88/29**

(84) Etats contractants désignés:
**AT BE CH DE IT LI NL SE**

(56) Documents cité:
**EP-A-0 137 136**
**DE-A-1 554 670**
**DE-A-2 251 301**
**FR-A-1 505 094**
**GB-A-976 230**
**US-A-1 993 338**
**US-A-4 199 268**

(73) Titulaire: **MOULINEX, 7 à 15, rue Jules- Ferry,**
**F-93171 Bagnolet Cédex (FR)**

(72) Inventeur: **Trocherie, Jean- Pierre, Sociéte**
**Moulinex rue des Acacias, F-53700 Villaines- La-**
**Juhel (FR)**

(74) Mandataire: **May, Hans Ulrich, Dr.,**
**Thierschstrasse 27, D-8000 München 22 (DE)**

## Description

L'invention se rapporte à un outil destiné à équiper les appareils électroménagers de préparation des aliments à fonctions multiples qui comportent un bol de forme générale cylindrique à axe vertical et un arbre vertical monté rotatif dans ce bol.

Les appareils de préparation des aliments de ce genre sont équipés d'un certain nombre d'outils qui sont chacun destinés à une ou plusieurs opérations bien précises, telles que hacher les aliments, ou les pétrir, les émincer, les battre, les émulsionner par exemple. Certains de ces outils, par exemple les outils hacheurs ou éminceurs, donnent en général toute satisfaction et, pour cette raison sont à peu près du même type pour tous les appareils de préparation des aliments proposés actuellement sur le marché. Il n'en est pas de même pour les outils batteurs et émulsionneurs, qui sont au contraire de types très divers.

L'invention concerne, plus précisément, un outil batteur-émulsionneur comportant un disque rotatif à axe vertical qui s'étend à proximité du fond du bol, et qui présente un diamètre à peine inférieur au diamètre du fond, ce disque présentant sur l'une au moins de ses faces supérieure et inférieure une série de saillies.

Le brevet US-A-1 993 338 décrit un outil de ce genre dans lequel le disque présente des trous qui débouchent sur la face supérieure et sur la face inférieure et qui comportent sur au moins un de leur bord une petite saillie.

L'invention a pour but d'apporter un perfectionnement à ce genre d'outil de manière à permettre les préparations de sauces mayonnaise dans un temps de travail assez court. Selon un mode de réalisation particulier de l'invention l'outil permet également la préparation des blancs en neige.

Selon la présente invention, le disque comporte une zone centrale qui porte le moyeu d'entraînement, une zone périphérique ondulée présentant une ondulation régulière à profil sinusoïdal ménageant ainsi une série de saillies orientées radialement à crête arrondie aussi bien sur la face supérieure que sur la face inférieure du disque, et une zone intérmédiaire plane lisse, les saillies de ladite zone périphérique ondulée présentent une hauteur qui va en augmentant depuis ladite zone lisse jusqu'au bord externe du disque.

Les essais ont montré qu'avec une telle configuration des saillies, à savoir l'augmentation de hauteur de chaque saillie dans la direction radiale vers le bord externe du disque, on obtient, dans la phase critique de début de confection d'une émulsion que la plus grande partie du produit à travailler soit chassée rapidement du centre du bol vers la périphérie du disque et qu'il ne reste pratiquement plus de produit, notamment dans la région comprise entre la face inférieure du disque et le fond du bol.

Les caractéristiques et avantages de l'invention ressortiront d'ailleurs de la description qui va suivre, à titre d'exemple, en référence aux dessins annexés dans lesquels:

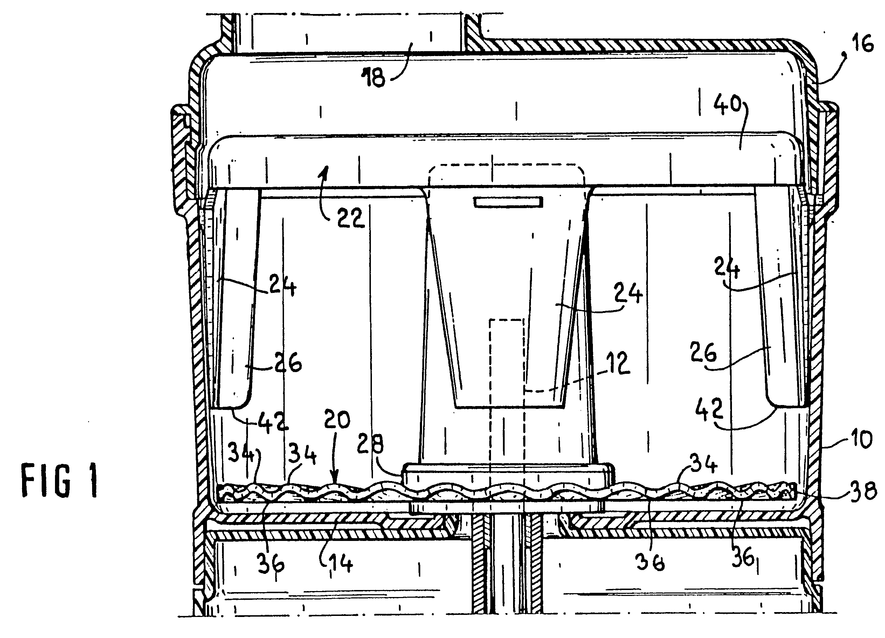

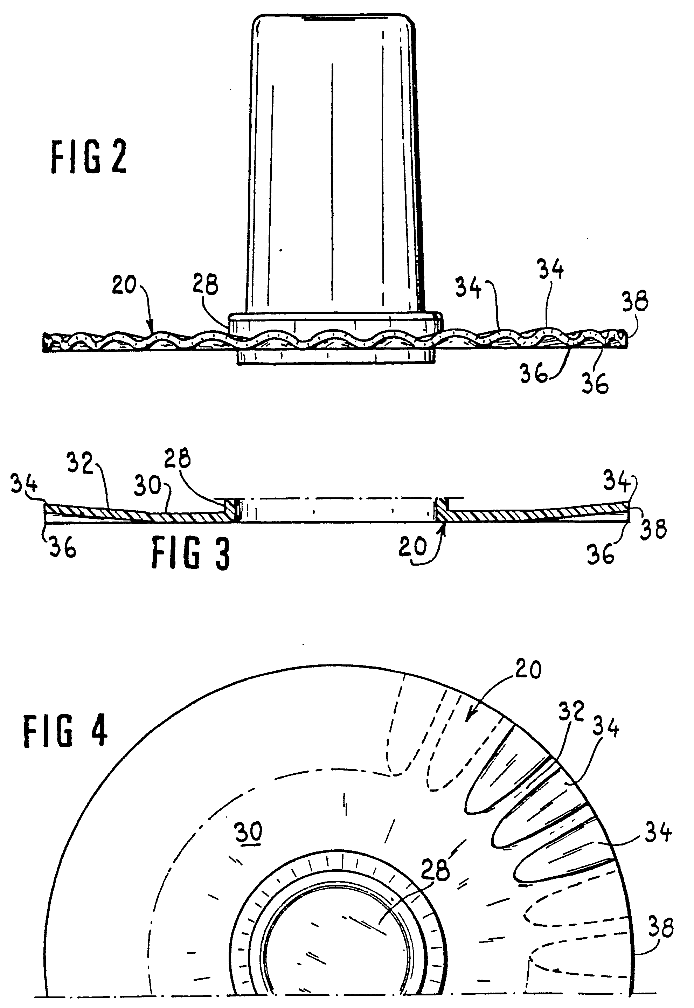

la figure 1 est une vue partielle d'un appareil électroménager équipé d'un outil batteur-émulsionneur selon l'invention, avec le bol de cet appareil représenté en coupe, et l'outil représenté en élévation ; la figure 2 est une vue en élévation du disque formant partie de l'outil de la figure 1; la figure 3 est une coupe partielle de ce disque; la figure 4 est une vue partielle en plan de ce disque.

L'appareil électroménager partiellement représenté à la figure 1 comporte un bol de travail 10 de forme générale cylindrique à axe vertical et un arbre vertical 12 monté rotatif dans ce bol et entrainé par un moteur électrique (non représenté). Le fond 14 du bol 10 est pratiquement plan et horizontal. Ce bol est fermé par un couvercle 16 présentant une ouverture 18 destiné à l'introduction d'ingrédients dans le bol pendant le travail.

Dans le bol 10 est installé un outil batteur-émulsionneur qui comprend, d'une part, un disque rotatif 20 à axe vertical accouplé à l'arbre 12 et, d'autre part, une cage cylindrique fixe 22 comprenant une série de quatre barreaux verticaux 24 ménageant sur la paroi interne latérale du bol 10 une série de quatre nervures verticales 26 orientées radialement vers l'intérieur.

Le disque 20 s'étend à proximité du fond 14 du bol 10. Son diamètre est à peine inférieur au diamètre de ce fond 14. Ce disque comporte une zone centrale 28 qui porte le moyeu d'entraînement de ce disque, une zone intermédiaire plane lisse 30, et une zone périphérique 32 présentant une ondulation régulière à profil sinusoïdal ménageant deux séries de saillies 34 et 36 orientées radialement, à crête arrondie, respectivement sur la face supérieure et sur la face inférieure du disque. Comme on le voit bien sur la figure 3, les saillies 34 et 36 présentent une hauteur qui va en augmentant depuis la zone lisse 30 jusqu'au bord externe 38 du disque. On notera que les crêtes des saillies inférieures 36 sont situées dans le plan de la face inférieure de la zone lisse 30, tandis que les crêtes des saillies supérieures 34 sont, quant à elles, inclinées par rapport au plan de la face supérieure de la zone lisse 30.

La cage fixe 22 comprend une armature annulaire 40 reliant rigidement les barreaux 24. Cette armature est engagée de manière amovible dans la région supérieure du bol, coaxialement à ce bol. Les barreaux verticaux 24 sont dirigés vers le bas et s'étendent sur une partie sulement de la hauteur du bol 10 de sorte que leurs extrémités inférieures 42 sont situées à distance du fond 14 du bol.

L'outil représenté, formé par la combinaison du disque rotatif 20 et de la cage fixe 22 est particulièrement adapté à la préparation des blancs d'oeuf en neige et de la crème fouettée. Pendant cette opération la matière travaillée est

entraînée en rotation par le disque 20; les nervures 26 de la cage 22 constituent des butées s'opposant à la libre rotation de la zone périphérique de la masse travaillée, ce qui contribue à l'inclusion d'air dans cette masse.

Pour la préparation d'émulsions, du genre par exemple de la sauce mayonnaise, on s'abstient de placer dans le bol la cage 22. Le seul disque 20 à bord ondulé permet, du fait de sa conformation particulière, de son grand diamètre, et de sa proximité du fond du bol, de réaliser dès le départ une bonne émulsion d'une faible quantité de matériau formée, par exemple, d'un seul jaune d'oeuf et d'un peu d'huile. Pour compléter la confection de la mayonnaise, l'usager versera régulièrement le complément nécessaire d'huile par l'ouverture 18 du couvercle 16 du bol.

**Revendications**

1. Outil batteur-émulsionneur destiné à équiper un appareil électroménager de préparation des aliments qui comporte un bol (10) de forme générale cylindrique à axe vertical et un arbre vertical (12) monté rotatif dans ce bol et destiné à entrainer en rotation un disque (20) à axe vertical qui s'étend à proximité du fond (14) du bol, et qui présente un diamètre à peine inférieur au diamètre du fond (14), ce disque (20) présentant sur l'une au moins de ses faces supérieure et inférieure une série de saillies (34, 36), caractérisé en ce que, le disque (20) comporte une zone centrale (28) qui porte le moyeu d'entraînement, une zone périphérique ondulée (32) présentant une ondulation régulière à profil sinusoïdal ménageant ainsi une série de saillies orientées radialement (34, 36) à crête arrondie aussi bien sur la face supérieure que sur la face inférieure du disque (20), et une zone intermédiaire plane lisse (30), les saillies (34, 36) de ladite zone périphérique ondulée 32 présentent une hauteur qui va en augmentant depuis ladite zone lisse (30) jusqu'au bord externe (38) du disque.

2. Outil batteur-émulsionneur selon la revendication 1, caractérisé en ce qu'il comprend en outre une cage cylindrique (22) comprenant une armature annulaire (40) engagée de manière amovible dans le bol (10) coaxialement à celui-ci, et une série de barreaux verticaux (24) solidaires de cette armature et ménageant sur la paroi interne du bol (10) une série de nervures verticales (26) orientées radialement vers l'intérieur.

3. Outil batteur-émulsionneur selon la revendication 2, caractérisé en ce que, l'armature annulaire (40) étant située dans la région supérieure du bol (10) et les barreax verticax (24) étant alors dirigés vers le bas à partir de cette armature (40), ces barreax s'étendent sur une partie seulement de la hauteur du bol (10) de sorte que leurs extrémités inférieures (42) sont situées à distance du fond (14) du bol (10).

**Patentansprüche**

1. Schlag- und Emulgierwerkzeug für eine elektrische Küchenmaschine zum Zubereiten von Nahrungsmitteln, welche eine Arbeitsschüssel (10) von im ganzen zylindrischer Form mit vertikaler Achse und eine in dieser Schüssel drehbar gehaltene vertikale Welle (12) aufweist, die dazu bestimmt ist, eine Scheibe (20) mit vertikaler Achse rotierend anzutreiben, die sich in der Nähe des Bodens (14) der Schüssel erstreckt und einen kaum geringeren Durchmesser als der Durchmesser des Bodens (14) aufweist, wobei diese Scheibe (20) auf mindestens einer ihrer Ober- und Unterseiten eine Reihe von Vorsprüngen (34, 36) aufweist, dadurch gekennzeichnet, daß die Scheibe (20) einen Zentralbereich (28), der die Antriebsnabe trägt, einen gewellten Randbereich (32), der eine regelmäßige Wellung mit Sinus-Profil aufweist, welche eine Gruppe von radial gerichteten Vorsprüngen (34, 36) mit abgerundetem Kamm sowohl auf der Oberseite wie auf der Unterseite der Scheibe (20) bildet, und einen ebenen, glatten Zwischenbereich (30) aufweist, wobei die Vorsprünge (34, 36) des gewellten Randbereiches (32) eine vom glatten Bereich (30) bis zum Außenrand (38) der Scheibe ansteigende Höhe zeigen.

2. Schlag- und Emulgierwerkzeug nach Anspruch 1, dadurch gekennzeichnet, daß es außerdem einen zylindrischen Einsatz (22) aufweist, der eine in die Schüssel (10) abnehmbar eingesetzte und zur Schüssel koaxiale ringförmige Armatur (40) und eine Reihe von mit dieser Armatur fest verbundenen senkrechten Stäben (24) aufweist, die an der Innenwand der Schüssel (10) eine Reihe von radial nach innen gerichteten vertikalen Rippen (26) bilden.

3. Schlag- und Emulgierwerkzeug nach Anspruch 2, dadurch gekennzeichnet, daß die ringförmige Armatur (40) im oberen Bereich der Schüssel (10) angeordnet ist und die vertikalen Stäbe (24) somit von dieser Armatur (40) her nach unten gerichtet sind und sich diese Stäbe nur über einen Teil der Höhe der Schüssel (10) erstrecken, so daß ihre unteren Enden (42) sich in einem Abstand vom Boden (14) der Schüssel (10) befinden.

**Claims**

1. A beating and emulsifying device for an electric kitchen appliance for preparing foodstuffs, comprising a working bowl (10) of generally cylindrical shape having a vertical axis and a vertical shaft (12) rotatably retained within said bowl for rotatingly driving a disk (20) having a vertical axis, said disk extending in the vicinity of the bottom (14) of the bowl and having a diameter which is only slightly less than that of said bottom (14), wherein said disk (20) has a number of protrusions (34, 36) on at least one of its upper and lower surfaces, characterised in that the disk (20) comprises a central region (28) carrying the drive hub, an ondulating peripheral region (32) having regular sine-shaped ondulations forming a group of radially directed protrusions (34, 36) with rounded crests on both the upper and the lower surface of the disk (20), and a flat smooth intermediate region (30), said protrusions (34, 36) of the ondulating peripheral region (32) exhibiting a height which rises from said smooth region (30) to the outer edge (38) of said disk.

2. A beating and emulsifying device as claimed in claim 1, characterised in that it further comprises a cylindrical insert (22) including an annular fitting (40) removably inserted in said bowl (10) and coaxial thereto, and a number of vertical bars (24) fixedly joined to said fitting, said bars constituting a series of radially inwardly directed vertical ridges (26) on the inner wall of said bowl (10).

3. A beating and emulsifying device as claimed in claim 2, characterised in that the annular fitting (40) is disposed in the upper portion of the bowl (10) and the vertical bars (24) therefore depend from said fitting (40) and said bars extend only along a part of the height of the bowl (10) so that their bottom ends (42) are located at a distance from the bottom (14) of the bowl (10).

FIG 1

**FIG 2**

20  28  34  34  38  36  36

**FIG 3**

34  32  30  28  34  38  36  20  36

**FIG 4**

20  32  34  30  28  34  38